# EUROPEAN PATENT APPLICATION

(11) **EP 4 723 180 A1**
(43) Date of publication of application: **08.04.2026**
(21) Application number: 24315449.9
(22) Date of filing: 02.10.2024
(51) Int. Cl.: H01M 4/04, H01M 4/131, H01M 4/1391, H01M 4/485, H01M 4/525, H01M 4/62

(54) **CURABLE COMPOSITIONS FOR THE MANUFACTURE OF ELECTRODES OF LITHIUM ION BATTERIES**

(71) Applicant: ARKEMA FRANCE, 92800 Puteaux (FR)
(72) Inventor: BIRIA, Saeid, EXTON, PA 19341 (US)
(74) Representative: Renard, Emmanuelle

(57) **Abstract**

A curable composition in the form of a slurry comprises an electrode particulate material; a (meth)acrylate oligomer; a solvent; an adhesion promoter comprising a (meth)acrylated phosphate ester; and optionally a (meth)acrylate monomer and/or a free radical photoinitiator. This composition is suitable for use in the fabrication of electrodes of lithium ion batteries. In particular, the composition may be applied to a current collector, then cured to form a cathode or an anode. It has been found that this composition provides electrodes having an homogeneous surface which is deprived of cracks and also enhanced adhesion of the electrode particulate material to current collectors used in lithium-ion batteries.

## Description

### TECHNICAL FIELD

The present invention relates to curable compositions suitable for curing, including curing by electron beam, and useful as cathodes or anodes of lithium ion batteries. The invention also relates to methods for making electrodes of lithium ion batteries.

### BACKGROUND OF THE INVENTION

Lithium-ion batteries are currently used in power supplies, in particular for portable devices such as tools, phones and computers, and for electric vehicles. They include an electrochemical cell comprising two electrodes, namely an anode (negative electrode) and a cathode (positive electrode) that are separated by a separator and ionically connected by an electrolyte. Each of these electrodes comprises a metal sheet, known as the current collector, which is coated with a particulate electrode material. A polymeric binder is typically used to hold the particles together and to the current collector and to provide flexibility to the electrode. This binder is usually mixed with the particulate material and with a solvent to obtain a paste having the required viscosity, which is then applied onto the current collector and dried.

Water has been preferred over organic solvents in the manufacture of electrodes due to environmental and health concerns. The polymeric binder may be a styrene-butadiene rubber (SBR) latex, which may be used in combination with a thickener such as carboxymethylcellulose (CMC), or an acrylic latex. Thus, US 2024/0204193 discloses a polymeric binder for the negative electrode of a lithium-ion battery, which is obtained from acrylic monomers, including a phosphate ester of polypropylene glycol methacrylate (Sipomer^{®} PAM 600 from SYENSQO). The polymeric binder is in the form of an aqueous dispersion and is mixed with an electrode particulate material and optionally with a crosslinker to obtain a slurry. This slurry is said to remain stable due to the presence of the phosphate monomer.

Instead of a binder, it has been suggested to mix the electrode material with radiation-curable binder precursors. For instance, U.S. Patent No. 11,043,336 discloses mixing specific polymer precursors with electrode solid particles to form an aqueous mixture, applying the mixture to an electrode current collector, followed by the application of actinic or electron beam radiation to the current collector for curing the polymer, thereby binding the electrode binder to the current collector. According to the '336 patent, the polymer precursors include (meth)acrylate-functionalized monomers and/or oligomers, in addition to a photoinitiator and optionally a coupling agent such as Silquest^{®} A-187 (Momentive Performance Materials). Aqueous mixtures in the context of electrode fabrication can pose several drawbacks. The primary issue is the potential for water to interfere with the curing process, particularly when using (meth)acrylate-functionalized monomers and oligomers. Water may slow down or inhibit the polymerization process, leading to incomplete curing or lower cross-linking density, which can compromise the mechanical strength and adhesion of the electrode material to the current collector. Additionally, the presence of water can cause swelling or delamination of the electrode coating during drying, negatively impacting the uniformity and integrity of the final product. Moreover, managing water removal and ensuring complete drying can add complexity to the manufacturing process, increasing energy consumption and potentially affecting the overall efficiency of the electrode production.

U.S. Patent No. 9,543,565 also discloses a curable electrode binder suitable for lithium ion batteries. The '565 patent discloses the use of functionalized rubber polymers that are electron beam and/or actinic radiation curable and may be utilized in the preparation of binders for electrodes to replace epoxy acrylate oligomers and thus improve metal adhesion. The rubber polymers are functionalized to include reactive groups, such carboxylated, acrylated, vinyl, vinyl ether, or epoxy functionalized polyisoprene and/or polybutadiene rubbers. The rubber polymers are intended to react with a reactive diluent, such as isorbornyl acrylate or PEG-200 diacrylate, or with a reactive crosslinking agent, which may also be a (meth)acrylate monomer.

The inventors have shown that polymer binders based on (meth)acrylate-functionalized oligomers can have suitable adhesion to current collectors and thus enhance the performance of electrodes when they are formulated in the presence of specific adhesion promoters. This invention thus provides an alternative solution to that disclosed in the prior art.

### SUMMARY OF THE INVENTION

This invention pertains to a composition in the form of a slurry comprising:
A) an electrode particulate material in an amount of at least 50 wt % by weight, based on the weight of the composition;
B) a (meth)acrylate-functionalized oligomer;
C) a solvent;
D) an adhesion promoter comprising a (meth)acrylated phosphate ester;
E) optionally, a (meth)acrylate-functionalized monomer; and
F) optionally, a free radical photoinitiator.

It is also directed to a method of forming an electrode comprising the steps of:
(a) applying the above composition to a current collector to form a layer;
(b) optionally, heating the layer, and
(c) curing the layer by exposing it to radiation.

### DETAILED DESCRIPTION OF THE INVENTION

In the context of this description, when ranges are given they should be understood as encompassing their lower and upper limits.

In addition, unless otherwise indicated, all percentages are to be understood as weight percents.

Moreover, the reference to "a" particulate material, "an" adhesion promoter, "an" oligomer, "a" solvent and so on encompasses both one and at least one of these compounds, including any mixture of two or more of these compounds.

As used herein, the term "slurry" means a free-flowing or flowable and/or pumpable suspension (at room temperature) including solid materials in a suitable solvent.

### Curable composition

This invention pertains to a curable composition comprising: (A) an electrode particulate material in an amount of at least 50 wt % by weight, based on the weight of the composition; (B) a (meth)acrylate-functionalized oligomer; (C) a solvent; and (D) an adhesion promoter comprising a (meth)acrylated phosphate ester. Optionally, this composition may further comprise a (meth)acrylate-functionalized monomer and/or a free radical photoinitiator. These constituents will now be described in detail.

### Electrode particulate material

The electrode particulate material may be selected from cathode particulate materials and anode particulate materials.

The electrode particulate material of the negative electrode (anode) for lithium-ion batteries typically includes an active material that can reversibly absorb and release or host (intercalate) lithium ions to create reaction sites for lithium ion electrochemical reactions (battery charging/discharging) and a conductive additive typically used to improve the conductivity of the negative electrode, which reduces the battery's internal resistance, and consequently boosts power output of the battery. Some compounds are capable of performing both functions (active material and conductive material).

In embodiments of the invention, the anode particulate material is selected from carbon materials such as carbon nanotubes (CNTs), graphite, hard carbon, activated carbon, carbon black, graphene, mesoporous carbon; silicon materials such as amorphous silicon, semi-crystalline silicon, silicon oxides and silicon nanowires; tin and tin oxides; germanium; lithium titanate; mixtures or composites of the aforementioned materials, and/or other materials known in the art as suitable for use as the anode in a lithium ion battery.

In embodiments of the invention, the cathode particulate material is selected from the group consisting of lithium metal oxides wherein the metal is selected from cobalt, manganese, nickel and/or vanadium, including lithium nickel manganese cobalt oxide, lithium nickel cobalt aluminum oxide, lithium manganese oxide, lithium nickel oxide and lithium cobalt oxide; lithium iron phosphate; mixtures thereof; and combinations thereof with carbon particles. Preferably the cathode particulate material is lithium iron phosphate.

The electrode particulate material may be present in an amount of 50 to 98 wt.%, preferably 60 to 98 wt.%, more preferably 70 to 97 wt.%, still preferably 80 to 96 wt.%, such as 85 to 95 wt.% or 90 to 95 wt.%, relative to the weight of components A), B), D) and, if present, E) and F).

### (Meth)acrylate-functionalized oligomer

Component (B) in the curable composition of this invention consist of one or more (meth)acrylate-functionalized oligomers.

The term "oligomer" refers to molecules with a distribution of molecular weights and typically having one or more polymerizable functional groups. An oligomer may be the reaction product of two or more monomers and typically has a number averaged molecular weight greater than 500 g/mol, preferably 500 g/mol to 60,000 g/mol, in particular 800 to 20,000 g/mol and more preferably 1,000 g/mol to 8,000 g/mol. As is recognized, commercial products of a particular oligomer may contain impurities or other chemical species.

The term "(meth)acrylate-functionalized oligomer" means an oligomer comprising a (meth)acrylate group. The term "(meth)acrylate group" encompasses acrylate groups (-O-CO-CH=CH₂) and methacrylate groups (-O-CO-C(CH₃)=CH₂).

Moreover, component (B) preferably comprises or consists of at least one (meth)acrylate-functionalized oligomer having 1 to 10 (meth)acrylate groups, in particular 2 to 6 (meth)acrylate groups, more particularly 2 (mcth)acrylate groups.

In particular, component (B) may comprise or consist of (meth)acrylate-functionalized oligomers selected from (meth)acrylate-functionalized urethane oligomers (sometimes also referred to as "urethane (meth)acrylate oligomers," "polyurethane (meth)acrylate oligomers" or "carbamate (meth)acrylate oligomers"), (meth)acrylate-functionalized epoxy oligomers (sometimes also referred to as "epoxy (meth)acrylate oligomers"), (meth)acrylate-functionalized polyether oligomers (sometimes also referred to , as "polyether (meth)acrylate oligomers"), (meth)acrylate-functionalized polydiene oligomers (sometimes also referred to as "polydiene (meth)acrylate oligomers"), (meth)acrylate-functionalized polycarbonate oligomers (sometimes also referred to as "polycarbonate (meth)acrylate oligomers"), (meth)acrylate-functionalized polyester oligomers (sometimes also referred to as "polyester (meth)acrylate oligomers"), (meth)acrylate-functionalized (meth)acrylic oligomers (sometimes also referred to as "(meth)acrylic (meth)acrylate oligomers" and mixtures thereof.

The urethane (meth)acrylate oligomers may be prepared by reacting aliphatic and/or aromatic diisocyanates with a polyol which may be selected from polyester polyols (including aromatic, aliphatic and mixed aliphatic/aromatic polyester polyols), polyether polyols, polycarbonate polyols, polycaprolactone polyols, polyorganosiloxane polyols (e.g., polydimethylsiloxane polyols), or polydiene polyols (e.g., polybutadiene polyols), or combinations thereof, and with a hydroxy-functionalized (meth)acrylate such as hydroxyethyl acrylate or hydroxyethyl methacrylate. Any order of addition may be practiced to prepare the polyurethane (meth)acrylate, as is known in the art. For example, the hydroxyl-functionalized (meth)acrylate may first be reacted with a polyisocyanate to obtain an isocyanate-functionalized (meth)acrylate, which may then be reacted with the polyol. In another embodiment, a polyisocyanate may first be reacted with a polyol to obtain an isocyanate-functionalized prepolymer, which is thereafter reacted with a hydroxyl-functionalized (meth)acrylate. Alternatively, all the components may be combined and reacted at the same time.

The urethane (meth)acrylate oligomers may contain two, three, four or more (meth)acrylate functional groups per molecule. Advantageously, the urethane (meth)acrylate oligomer comprises an aliphatic urethane (meth)acrylate oligomer having two (meth)acrylate groups.

Suitable polyether (meth)acrylate oligomers include, but are not limited to, the condensation reaction products of acrylic or methacrylic acid or synthetic equivalents or mixtures thereof with polyetherols which are polyether polyols (such as polyethylene glycol, polypropylene glycol or polytetramethylene glycol). Suitable polyetherols can be linear or branched substances containing ether bonds and terminal hydroxyl groups. Polyetherols can be prepared by ring opening polymerization of cyclic ethers such as tetrahydrofuran or alkylene oxides (e.g., ethylene oxide and/or propylene oxide) with a starter molecule. Suitable starter molecules include water, polyhydroxyl functional materials, polyester polyols and amines.

Exemplary polyester (meth)acrylate oligomers include the reaction products of acrylic or methacrylic acid or mixtures or synthetic equivalents thereof with hydroxyl group-terminated polyester polyols. The reaction process may be conducted such that all or essentially all of the hydroxyl groups of the polyester polyol have been (meth)acrylated, particularly in cases where the polyester polyol is difunctional. The polyester polyols can be made by polycondensation reactions of polyols (in particular, diols) and polycarboxylic acid functional compounds (in particular, dicarboxylic acids and anhydrides). The polyol and polycarboxylic acid functional compounds can each have linear, branched, cycloaliphatic or aromatic structures and can be used individually or as mixtures.

Examples of suitable epoxy (meth)acrylates include the reaction products of acrylic or methacrylic acid or mixtures thereof with an epoxy resin (polyglycidyl ether or ester). The epoxy resin may, in particular, be selected from 3,4-epoxycyclohexylmethyl-3',4'-epoxycyclohexanecarboxylate, 2-(3,4-epoxycyclohexyl-5,5-spiro-3,4-epoxy) cyclohexane-1,4-dioxane, bis(3,4-epoxycyclohexylmethyl)adipate, bis(3,4-epoxy-6-methylcyclohexyl methyl)adipate, 3,4-epoxy-6-methylcyclohexyl-3',4'-epoxy-6'-methylcyclo-hexane carboxylate, dicyclopentadiene diepoxide, a bisphenol diglycidyl ether, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of a polyether polyol obtained by the addition of one or more alkylene oxides to an aliphatic polyhydric alcohol such as ethylene glycol, propylene glycol and glycerol, diglycidyl esters of aliphatic C6-C22 dibasic acids, glycidyl esters of C30-36 dimers of fatty acids, an epoxidized vegetable oil (such as epoxidized soybean oil and epoxidized linseed oil), epoxidized polybutadiene, and the like.

Suitable (meth)acrylic (meth)acrylate oligomers include oligomers which may be described as substances having an oligomeric (meth)acrylic backbone which is functionalized with one or (meth)acrylate groups (which may be at a terminus of the oligomer or pendant to the acrylic backbone). The (meth)acrylic backbone may be a homopolymer, random copolymer or block copolymer comprised of repeating units of (meth)acrylic monomers. The (meth)acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. (Meth)acrylic (meth)acrylate oligomers may be prepared using any procedures known in the art, such as by oligomerizing monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized oligomer intermediate, which is then reacted with one or more (meth)acrylate-containing reactants to introduce the desired (meth)acrylate functional groups.

In embodiments of the invention, the (meth)acrylate-functionalized oligomer is selected from the group consisting of urethane (meth)acrylate oligomers, polyester (meth)acrylate oligomers and polyether (meth)acrylate oligomers. Preferably, component (B) comprises or consists of a polyether urethane (meth)acrylate or a polyester urethane (meth)acrylate, such as an aliphatic polyester-based urethane di- or tetra-acrylate oligomer, an aliphatic polyether-based urethane di- or tetra-acrylate oligomer or an aliphatic polyester/polyether-based urethane di- or tetra-acrylate oligomer. More preferably, component (B) comprises or consists of a polyether urethane acrylate, still preferably component (B) comprises or consists of an aliphatic polyether-based urethane diacrylate oligomer. In an embodiment, this oligomer may comprise residues of hydroxy ethyl acrylate, isophorone diisocyanate, and a polyether polyol.

Commercially available oligomers suitable for use as the (meth)acrylate oligomer herein include CN9018, CN9021, and CN996, commercially available from Sartomer.

The (meth)acrylate oligomer may be present in an amount of about 2 to about 20 wt%, preferably about 4 to about 15 wt%, and most preferably about 6 to about 12 wt% based on the weight of components A), B), D) and, if present, E) and F).

### Adhesion promoter

The curable composition of this invention comprises an adhesion promoter which comprises or consists of one or more (meth)acrylated phosphate esters.

It has been found that compositions employing adhesion promoters comprising a (meth)acrylated phosphate ester form after curing electrodes having an homogeneous surface which is deprived of cracks and also enhanced adhesion of the electrode particulate material to current collectors used in lithium-ion batteries.

The adhesion promoter may comprise or consist of a mono(meth)acrylated phosphate ester, a di(meth)acrylated phosphate ester or a mixture thereof. In a preferred embodiment, the (meth)acrylated phosphate ester comprises or consists of a mixture of a mono(meth)acrylated phosphate ester and a di(meth)acrylated phosphate ester, for instance in a weight ratio of 30:70 to 70:30, preferably from 40:60 to 60:40 and still preferably of about 50:50.

In an embodiment, the mono(meth)acrylated phosphate ester and the di(meth)acrylated phosphate ester are monomers having formulas (I) and (II), respectively: 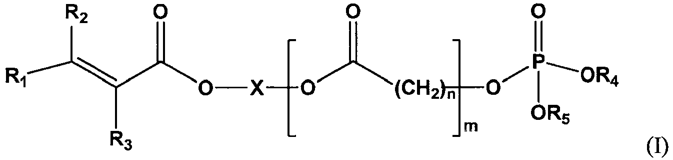 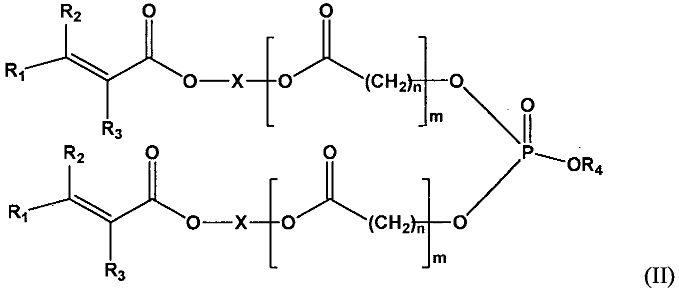 wherein in Formula (1) and Formula (2):
each R₁ is independently H or C₁-C₆ alkyl;
each R₂ is independently H or C₁-C₆ alkyl;
each R₃ is independently H or C₁-C₆ alkyl;
each X is independently C₁-C₆ alkylene, where a N, O or S atom may be inserted between any two carbon atoms present in the alkylene chain and wherein carbon atoms in the alkylene chain may be substituted with a C₁-C₃ alkyl group;
each R₄ is independently H or a cation;
each R₅ is independently H or a cation;
each n is independently 4 to 7; and
each m is independently 0 to 25.

It is preferred that the mono(meth)acrylated phosphate ester and/or the di(meth)acrylated phosphate ester is such that at least one, and preferably all, the following conditions are met:
- R₁ = R₂ = R₄ = R₅ = H
- R₃ = H or CH₃
- X = -CH₂-CH₂-.

In an embodiment, m is 0.

In a preferred embodiment, m ranges from 1 to 25, preferably 2 to 18, and more preferably 3 to 12 and n is 5.

The adhesion promoter may be present in an amount of about 0.3 to about 5 wt%, preferably about 0.4 to about 2 wt%, and most preferably about 0.5 to about 1.5 wt% based on the weight of components A), B), D) and, if present, E) and F).

### Solvent

In embodiments of the invention, the solvent (C) comprises or consists of a polar organic solvent such as acetone, butyl acetate, isopropanol, methyl ethyl ketone (MEK), ethanol, methanol, acetonitrile, propylene carbonate, ethyl acetate and mixtures thereof, and preferably comprises or consists of isopropanol.

The solvent may be present in an amount of about 30 to about 80 wt%, preferably about 35 to about 70 wt%, and most preferably about 45 to about 70 wt% based on the weight of the curable composition.

In an embodiment of the invention, the composition is anhydrous. By this expression, it is means that the composition comprises less than 5% of water, preferably less than 2% of water, more preferably less than 1% of water, based on the total weight of the composition.

Moreover, in an embodiment of the invention, the composition does not comprise n-methyl-2-pyrrolidone.

### (Meth)acrylate-functionalized monomer

Component (E) as optionally used in this invention consists of one or more (meth)acrylate-functionalized monomers. Component (E) is distinct from component (B).

As used herein, the term "(meth)acrylate-functionalized monomer" means a monomer comprising a (meth)acrylate group. The term "(meth)acrylate group" encompasses acrylate groups (-O-CO-CH=CH₂) and methacrylate groups (-O-CO-C(CH₃)=CH₂).

The (meth)acrylate-functionalized monomer may have a molecular weight of less than 600 g/mol, in particular from 100 to 550 g/mol, more particularly 200 to 500 g/mol.

The (meth)acrylate-functionalized monomer may have 1 to 6 (meth)acrylate groups, in particular 1 to 3 (meth)acrylate groups.

Component (E) may comprise a mixture of (meth)acrylate-functionalized monomers having different functionalities. For example, component (E) may comprise a mixture of a (meth)acrylate-functionalized monomer containing a single acrylate or methacrylate group per molecule (referred to herein as "mono(meth)acrylate-functionalized compounds") and a (meth)acrylate-functionalized monomer containing 2 or more, preferably 2 to 6, acrylate and/or methacrylate groups per molecule (referred to herein as "poly(meth)acrylate-functionalized monomer").

In one embodiment, component (E) comprises or consists of a mono(meth)acrylate-functionalized monomer.

Examples of suitable mono(meth)acrylate-functionalized monomers include, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and mixtures thereof.

The following compounds are specific examples of mono(meth)acrylate-functionalized monomers suitable for use in component (E): methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; benzyl (meth)acrylate, cyclic trimethylolpropane formal (meth)acrylate; (2,2-dimethyl-1,3-dioxolan-4-yl)methyl (meth)acrylate; (2-ethyl-2-methyl-1,3-dioxolan-4-yl)methyl (meth)acrylate; glycerol formal methacrylate; isobomyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; a caprolactone mono(meth)acrylate; and combinations thereof.

In another embodiment, component (E) may comprise or consist of a poly(meth)acrylate-functionalized monomer.

Examples of suitable poly(meth)acrylate-functionalized monomers include acrylate and methacrylate esters of polyols selected from ethylene glycol, di-, tri- or tetraethylene glycol, 1,2- or 1,3-propylene glycol, di-, tri- or tetra(1,2-propylene glycol), di-, tri- or tetra(1,3-propylene glycol), 1,2-, 1,3- or 1,4-butylene glycol, di-, tri- or tetra(1,4-butylene glycol), 1,5-pentanediol, 1,6-hexanediol, 1,7-heptanediol, 1,8-octanediol, 1,9-nonanediol, 1,10-decanediol, 1,12-dodecanediol, 2-methyl-1,3-propanediol, 2,2-dimethyl-1,3-propanediol, 2,2-diethyl-1,3-propanediol, 2-methyl-2-ethyl-1,3-propanediol, 3-methyl-1,5-pentanediol, 3,3-dimethyl-1,5-pentanediol, 2,4-diethyl-1,5-pentanediol, 3-butyl-3-ethyl-1,5-pentane diol, 2,2,4-trimethyl 1,5-pentanediol, cyclohexanediol, cyclohexane-1,4-dimethanol, norbornene dimethanol, norbornane dimethanol, tricyclodecanediol, tricyclodecane dimethanol, hydrogenated bisphenol A, B, F or S, a dianhydrohexitol (i.e. isosorbide, isomannide, isoidide), as well as the alkoxylated (i.e. ethoxylated and/or propoxylated) derivatives thereof; and mixtures thereof. Such polyols may be fully or partially esterified (with (meth)acrylic acid, (meth)acrylic anhydride, (meth)acryloyl chloride or the like), provided they contain at least two (meth)acrylate functional groups per molecule.

Exemplary poly(meth)acrylate-functionalized monomers may include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; glyceryl di(meth)acrylate; glyceryl tri(meth)acrylate; trimethylolethane tri(meth)acrylate; trimethylolethane di(meth)acrylate; trimethylolpropane tri(meth)acrylate; ethoxylated trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; and mixtures thereof.

In embodiments of the invention, the (meth)acrylate monomer is selected from the group consisting of aliphatic monofunctional (meth)acrylate monomers, preferably cyclic aliphatic monofunctional (meth)acrylate monomers such as tetrahydrofurfuryl acrylate, isobomyl acrylate, trimethylolpropane formal acrylate and combinations thereof; aliphatic difunctional (meth)acrylate monomers, preferably acyclic aliphatic difunctional (meth)acrylate monomers such as 1,4-butanediol di(meth)acrylate, 1,6-hexanediol diacrylate, and combinations thereof; and mixtures thereof.

Component (E) may represent from 1 to 10 wt.%, preferably from 2 to 8 wt.%, more preferably from 3 to 6 wt.% based on the weight of components A), B), D), E) and if present, F).

### Free radical photoinitiator

Photoinitiators are compounds that can generate free radicals upon exposure to light of an appropriate wavelength and/or intensity. Photoinitiators can adopt two different modes of action, and are classified by mode of action as Norrish Type I and Norrish Type II photoinitiators. As used herein, the term "activity" with reference to Norrish Type I and Norrish Type II activity is intended to relate to Norrish photo initiation and analogous reactions. For instance, a photoinitiator having Norrish Type I activity within the scope of this invention would be a photoinitiator characterized by a cleavage reaction into two radical fragments of the original photoinitiator on exposure to light. For an initiator having Norrish Type II activity, exposure to light causes the abstraction of an atom, such as hydrogen, to generate the radical. When present, the photoinitiator (F) may be a photoinitiator having Norrish type I activity and/or Norrish type II activity, more particularly a photoinitiator having Norrish type II activity.

Non-limiting types of photoinitiators suitable for use in the composition of the invention include, for example, benzoins, benzoin ethers, acetophenones, α-hydroxy acetophenones, benzil, benzil ketals, anthraquinones, phosphine oxides, acylphosphine oxides, α-hydroxyketones, phenylglyoxylates, α-aminoketones, benzophenones, thioxanthones, xanthones, acridine derivatives, phenazine derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of specific photoinitiators include, but are not limited to, 2-methylanthraquinone, 2-ethylanthraquinone, 2-chloroanthraquinone, 2-benzyanthra-quinone, 2-t-butylanthraquinone, 1,2-benzo-9,10-anthraquinone, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, , 2-isopropylthioxanthone, thioxanthone, diethyl thioxanthone, 1,5-acenaphthylene, benzil, α-hydroxyketone, 2,4,6-trimethylbenzoyldiphenyl phosphine oxide, , 2,2-dimethoxy-1,2-diphenylethanone, 1-hydroxycyclohexyl phenyl ketone, 2-methyl-1-[4-(methylthio) phenyl]-2-morpholinopropanone, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid sodium salt monohydrate, (benzene) tricarbonylchromium, , benzoin isobutyl ether, benzophenone/1-hydroxycyclohexyl phenyl ketone 50/50 blend, 3,3',4,4'-benzophenonetetracarboxylic dianhydride, 4-benzoylbiphenyl, 2-benzyl-2-(dimethyl-amino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, , 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone 50/50 blend, 4'-ethoxyacetophenone, 2,4,6-trimethylbenzoyldiphenylphosphine oxide, 3'-hydroxyacetophenone, 4'-hydroxyacetophenone, 3-hydroxybenzophenone, 4-hydroxybenzophenone, 2-methylbenzophenone, 3-methylbenzophenone, methybenzoylformate, phenanthrene-quinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, and combinations thereof.

In particular, the radical initiator may comprise a photoinitiator selected from a benzophenone such as SpeedCure^{®} BP (benzophenone), SpeedCure^{®} 7005 (polymeric benzophenone), SpeedCure^{®} 7006 (polymeric benzophenone), SpeedCure^{®} EMK (4,4'-bis(diethylamino)benzophenone) or SpeedCure^{®} BMS (4-benzoyl-4'-methyldiphenyl sulphide); a thioxanthone such as SpeedCure^{®} 7010 (polymeric thioxanthone), SpeedCure^{®} ITX (isopropyl thioxanthone), SpeedCure^{®} DETX (2,4-diethylthioxanthone) or SpeedCure^{®} CPTX (1-chloro-4-propoxythioxanthone); an α-hydroxy acetophenone; an acylphosphine oxide such as SpeedCure^{®} BPO (phenyl bis(2,4,6-trimethylbenzoyl)-phosphine oxide), SpeedCure^{®} TPO (2,4,6-trimethylbenzoyldiphenylphosphine oxide) or SpeedCure^{®} TPO-L (ethyl (2,4,6-trimethylbenzoyl)phenyl phosphinate); a phenylglyoxylate such as SpeedCure^{®} MBF (methylbenzoylformate); and mixtures thereof.

The free radical photoinitiator may be present in the curable composition in an amount of from 0.1 to 5% based on the weight of components A), B), D), F) and if present, E).

### Methods

The composition of this invention may be prepared by mixing the adhesion promoter (D), (meth)acrylate-functionalized oligomer (B) and optional constituents (E) and (F) with the solvent (C) to obtain a binder or resin composition which is then mixed with the electrode particulate material (A) to form a slurry. This slurry may have a viscosity of about 100 to about 5,000 cPs, preferably from about 500 to about 3,000 cPs, and most preferably from about 1,000 to about 2,500 at 25°C, as measured using a Brookfield viscometer, model DV-II, using a 27 spindle (with the spindle speed varying typically between 20 and 200 rpm, depending on viscosity).

This composition may be used in the manufacture of an electrode, preferably of a cathode, according to a process comprising the steps of:
(a) applying a composition of any of claims 1-13 to a current collector to form a layer;
(b) optionally, heating the layer; and
(c) curing the layer by exposing it to radiation.

Specifically, the composition may be applied to one or both sides of a current collector as a thin film, then allowed to dry (possibly under vacuum and/or with heat) so as to remove the solvent, cured, and optionally covered with an electrolyte, so as to form an electrode assembly. The current collector may be in the form of a foil, a mesh, a foam, a rod or any other shape and may be made of aluminum, copper or nickel. The composition may be applied by any method known in the art such as spraying, rolling, draw bar application, bird bar application, gravure, slot coating or other coil coating methods. It may the be dried, for instance at 40-80°C in an oven. The composition may then be cured by exposing it to actinic (UV or visible) or electron beam (EB) radiation. This allows forming the polymeric binder, encapsulating the electrode particulate material within the polymer network and also firmly binding the electrode thus obtained to the current collector.

In an embodiment, the composition comprises the free radical photoinitiator and the radiation is actinic radiation. In another embodiment, the composition does not comprise the free radical photoinitiator and the radiation is electron beam radiation.

The thickness of the layer may be from about 1 microns to about 500 microns, preferably about 25 microns to about 400 microns, more preferably about 50 microns to about 150 microns.

Although the invention is illustrated and described herein with reference to specific embodiments, the invention is not intended to be limited to the details shown. Rather, various modifications may be made in the details within the scope and range of equivalents of the claims and without departing from the invention.

### EXAMPLES

### Example 1: Preparation of cathode samples

Slurries comprising lithium iron phosphate (80%/85%/90%) and a resin system (20%/15%/10%) were prepared and introduced into a Flacktek^{®} polypropylene high-speed mixer cup. The mixture was blended for 4 minutes at 2000 rpm. Isopropanol (35%/40%/50%) was added for dispersion purposes. The resin system consisted of adhesion promoters, oligomers, and optionally acrylate monomers.

Subsequently, the slurries were cast onto an aluminum collector that had been cleaned with acetone prior to casting, with thicknesses ranging between 50 to 100 µm. The casted slurries underwent E-beam curing with a surface dose of 50 kGy, a speed of 6 m/min, and a voltage of 200 kV, utilizing 2 passes. The samples were dried in an oven at 60°C for 5 minutes before curing.

Provided below in Tables 1A-1D are the constituents used and their amounts.

**Table 1A**

| Components | Sample 1 | Sample 2 | Sample 3 | Sample 4 | Sample 5 |
|---|---|---|---|---|---|
| LFP | 90% | 90% | 80% | 85% | 90% |
| CN9021 | 10% | 0% | 15% | 10% | 5% |
| SR9054 | 0% | 10% | 0% | 0% | 0% |
| Silane A-187 | 0% | 0% | 5% | 5% | 5% |
| IPA-Solvent | 50% | 50% | 35% | 45% | 50%-55% |

**Table 1B**

| Components | Sample 6 | Sample 7 | Sample 8 | Sample 9 | Sample 10 | Sample 11 |
|---|---|---|---|---|---|---|
| LFP | 80% | 85% | 90% | 80% | 85% | 90% |
| CN9021 | 15% | 10% | 5% | 15% | 10% | 5% |
| SR9053 | 5% | 5% | 5% | 0% | 0% | 0% |
| SR9054 | 0% | 0% | 0% | 5% | 5% | 5% |
| IPA-Solvent | 35% | 45% | 50%-55% | 35% | 45% | 50%-55% |

**Table 1C**

| Components | Sample 12 | Sample 13 | Sample 14 | Sample 15 | Sample 16 | Sample 17 |
|---|---|---|---|---|---|---|
| LFP | 80% | 85% | 90% | 80% | 85% | 90% |
| CN9021 | 15% | 10% | 5% | 15% | 10% | 5% |
| NTX14724 | 5% | 5% | 5% | 0% | 0% | 0% |
| NTX15319 | 0% | 0% | 0% | 5% | 5% | 5% |
| IPA-Solvent | 35% | 45% | 50%-55% | 35% | 45% | 50%-55% |

**Table 1D**

| Components | Sample 18 | Sample 19 | Sample 20 |
|---|---|---|---|
| LFP | 80% | 85% | 90% |
| CN9021 | 15% | 10% | 5% |
| SR499 | 2% | 2% | 2% |
| SR531 | 2% | 2% | 2% |
| NTX15319 | 1% | 1% | 1% |
| IPA-Solvent | 35% | 45% | 50%-55% |

LFP is lithium iron phosphate (LiFePO₄).

CN9021 is an aliphatic urethane diacrylate oligomer available from Sartomer.

Silane A-187 was used as a control and is an adhesion promoter commercially available from Momentive Performance Materials of Niskayuna, New York.

IPA is isopropanol.

SR9053 is a blend of a diacrylate phosphate diester and monoacrylate phosphate monoester in 50% SR502 having the formula: 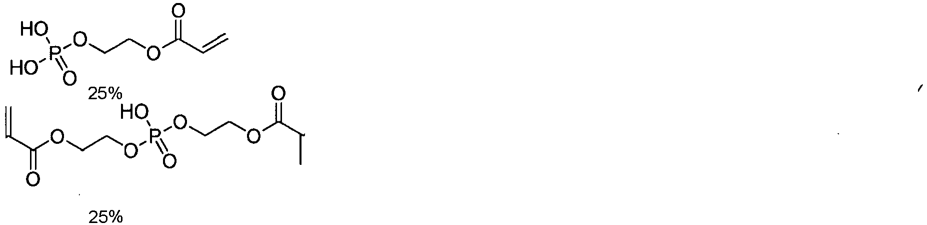
wherein SR502 is ethoxylated (9) trimethylolpropane triacrylate
SR531 is cyclic trimethylolpropane formal acrylate
SR9054 is a 50/50 blend of a dimethacrylate phosphate diester and monomethacrylate phosphate monoester having the formula: 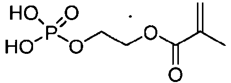 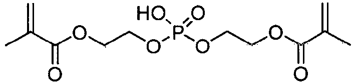
SR499 is ethoxylated (6) trimethylolpropane triacrylate
NTX14724 was made as follows. Toluene was used as process solvent to disperse P₂O₅ and the caprolactone modified 2-hydroxyethyl (meth)acrylate was then metered into the P₂O₅/toluene mixture. Toluene was then stripped off to obtain phosphate esters.

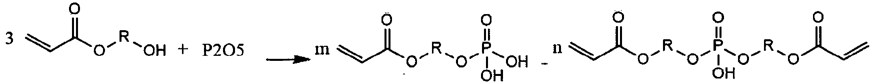

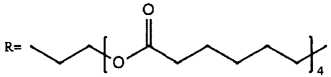

NTX15319 was made as follows. SR833S was used to disperse P₂O₅. With no process solvent required, the step to remove the process solvent could be omitted. The caprolactone modified 2-hydroxyethyl (meth)acrylate was metered into the P₂O₅/SR833S mixture to obtain a phosphate esters monomer blend. Final product was filtered through 0.5 micron bag to remove unreacted P₂O5. 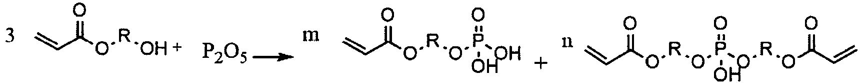 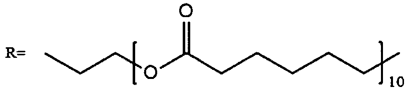 wherein SR833S is a diacrylate monomer having the following structure:

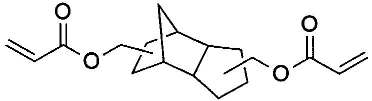

### Example 2: Visual assessment of the samples

The electrodes prepared in Example 1 were tested to evaluate their aspect and their adherence to the current collector.

The results of these experiments are reported in the following Tables 2A-2D.

**Table 2A**

| Components | Sample 1 | Sample 2 | Sample 3 | Sample 4 | Sample 5 |
|---|---|---|---|---|---|
| Wetting | Poor | Poor | Good | Poor | Poor |
| Cracks | Yes | Yes | Yes | Yes | Yes |
| Adherence | Poor | Acceptable | Poor | Poor | Poor |

**Table 2B**

| Components | Sample 6 | Sample 7 | Sample 8 | Sample 9 | Sample 10 | Sample 11 |
|---|---|---|---|---|---|---|
| Wetting | OK | Poor | Poor | OK | Poor | Poor |
| Cracks | No | No | Yes | No | No | Yes |
| Adherence | OK | Poor | Poor | OK | Poor | Poor |

**Table 2C**

| Components | Sample 12 | Sample 13 | Sample 14 | Sample 15 | Sample 16 | Sample 17 |
|---|---|---|---|---|---|---|
| Wetting | OK | OK | OK | OK | OK | OK |
| Cracks | No | No | No | No | No | No |
| Adherence | OK | OK | OK | OK | OK | OK |

**Table 2D**

| Components | Sample 18 | Sample 19 | Sample 20 |
|---|---|---|---|
| Wetting | OK | OK | OK |
| Cracks | No | No | No |
| Adherence | OK | OK | OK |

All formulations containing the adhesion promoters of this invention allowed preparing electrodes comprising lower than 85% of electrode particulate material, which did not have cracks and adhered well to the current collector (see Samples 6, 9, 12, 15 and 18). This was not the case of samples which contained either no adhesion promoter or a silane compound as an adhesion promoter (see Samples 1 and 3-5). These samples exhibited consistent issues with poor wetting and the presence of cracks, resulting in poor adherence during and after folding.

In formulations comprising at least 85% of electrode particulate material, the use of modified caprolactone-4HEA and 10HEA (NTX15319 and NTX14724) as adhesion promoters enhanced adhesion when compared to unmodified adhesion promoters of this invention (SR9053 and SR9054) (see Samples 13-14 and 16-17 vs. Samples 7-8 and 10-11). These samples consistently showed excellent wetting, uniform coating, and a complete absence of cracks, resulting in strong adherence after folding and ensuring that the coating remained intact without peeling off.

Although Samples 7, 8, 10, and 11 still had issues with poor wetting and/or the presence of cracks at higher particulate loadings, they performed better than the control samples overall, indicating a step up in quality.

Moreover, incorporating (meth)acrylate-functionalized monomers such as SR499 and SR531 into the formulations (Samples 18-20) was shown to increase the crosslinking density, which improved mechanical properties like adhesion and resistance to cracking. It was thus possible to lower the amount of adhesion promoter.

These monomers also optimize wetting and flow, leading to a more uniform, defect-free coating, and allow for fine-tuning of curing kinetics, making the formulation more robust and durable.

It should be understood that any two quantitative values assigned to a property may constitute a range of that property, and all combinations of ranges formed from all stated quantitative values of a given property are contemplated in this disclosure. The subject matter disclosed herein has been described in detail and by reference to specific embodiments. It should be understood that any detailed description of a component or feature of an embodiment does not necessarily imply that the component or feature is essential to the particular embodiment or to any other embodiment.

## Claims

1. A composition in the form of a slurry comprising:
A) an electrode particulate material in an amount of at least 50 wt % by weight, based on the weight of the composition;
B) a (meth)acrylate-functionalized oligomer;
C) a solvent;
D) an adhesion promoter comprising a (meth)acrylated phosphate ester;
E) optionally, a (meth)acrylate-functionalized monomer; and
F) optionally, a free radical photoinitiator.

2. The composition of claim 1, wherein the (meth)acrylated phosphate ester (D) is selected from the group consisting of: a mono(meth)acrylated phosphate ester, a di(meth)acrylated phosphate ester or a mixture thereof, preferably the (meth)acrylated phosphate ester comprises a mixture of a mono(meth)acrylated phosphate ester and a di(meth)acrylated phosphate ester, for instance in a weight ratio of 30:70 to 70:30, preferably from 40:60 to 60:40 and still preferably of about 50:50.

3. The composition of claim 2, wherein the mono(meth)acrylated phosphate ester and the di(meth)acrylated phosphate ester are monomers having formulas (I) and (II), respectively: 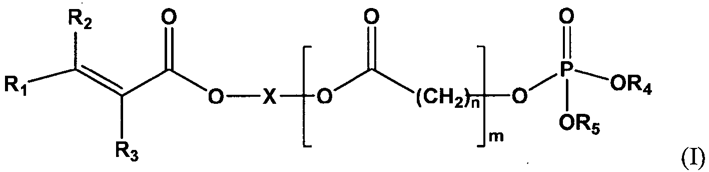 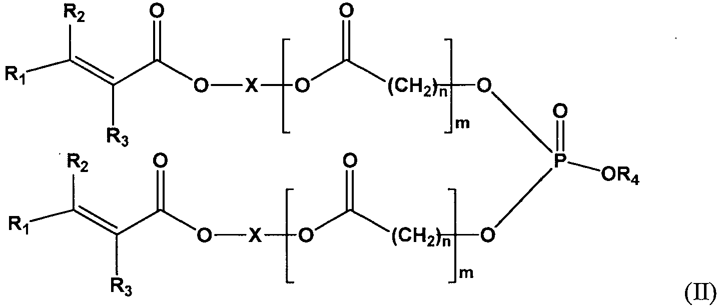 wherein in Formula (1) and Formula (2):
each R₁ is independently H or C₁-C₆ alkyl;
each R₂ is independently H or C₁-C₆ alkyl;
each R₃ is independently H or C₁-C₆ alkyl;
each X is independently C₁-C₆ alkylene, where a N, O or S atom may be inserted between any two carbon atoms present in the alkylene chain and wherein carbon atoms in the alkylene chain may be substituted with a C₁-C₃ alkyl group;
each R₄ is independently H or a cation;
each R₅ is independently H or a cation;
each n is independently 4 to 7; and
each m is independently 0 to 25.

4. The composition of claim 3, wherein the mono(meth)acrylated phosphate ester and/or the di(meth)acrylated phosphate ester is such that at least one, and preferably all, the following conditions are met:
•
R₁ = R₂ = R₄ = R₅ =H
•
R₃ = H or CH₃
•
X = -CH₂-CH₂-.

5. The composition of claim 3 or 4, wherein the mono(meth)acrylated phosphate ester and/or the di(meth)acrylated phosphate ester is such that m is 0.

6. The composition of claim 3 or 4, wherein the mono(meth)acrylated phosphate ester and/or the di(meth)acrylated phosphate ester is such that m ranges from 1 to 25, preferably 2 to 18, and more preferably 3 to 12 and n is 5.

7. The composition of any one of claims 1-6, wherein the adhesion promoter is present in an amount of about 0.3 to about 5 wt%, preferably about 0.4 to about 2 wt%, and most preferably about 0.5 to about 1.5 wt% based on the weight of components A), B), D) and, if present, E) and F).

8. The composition of any one of claims 1-7, wherein the electrode particulate material is a cathode particulate material and is selected from the group consisting of lithium metal oxides wherein the metal is selected from cobalt, manganese, nickel and/or vanadium, including lithium nickel manganese cobalt oxide, lithium nickel cobalt aluminum oxide, lithium manganese oxide, lithium nickel oxide and lithium cobalt oxide; lithium iron phosphate; mixtures thereof; and combinations thereof with carbon particles, preferably the cathode particulate material is lithium iron phosphate.

9. The composition of any one of claims 1-8, wherein the electrode particulate material is present in an amount of 50 to 98 wt.%, preferably 60 to 98 wt.%, more preferably 70 to 97 wt.%, still preferably 80 to 96 wt.%, such as 85 to 95 wt.% or 90 to 95 wt.%, relative to the weight of components A), B), D) and, if present, E) and F).

10. The composition of any one of claims 1-9, wherein the (meth)acrylate-functionalized oligomer is selected from the group consisting of urethane (meth)acrylate oligomers, epoxy (meth)acrylate oligomers, polyether (meth)acrylate oligomers, polydiene (meth)acrylate oligomers, polycarbonate (meth)acrylate oligomers, polyester (meth)acrylate oligomers, (meth)acrylic (meth)acrylate oligomers and mixtures thereof, preferably from the group consisting of urethane (meth)acrylate oligomers, polyester (meth)acrylate oligomers and polyether (meth)acrylate oligomers, more preferably component (B) comprises or consists of a polyether urethane (meth)acrylate or a polyester urethane (meth)acrylate, still preferably component (B) comprises or consists of an aliphatic polyether-based urethane diacrylate oligomer.

11. The composition of any one of claims 1-10, wherein the (meth)acrylate-functionalized oligomer is present in an amount of about 2 to about 20 wt%, preferably about 4 to about 15 wt%, and most preferably about 6 to about 12 wt% based on the weight of components A), B), D) and, if present, E) and F).

12. The composition of any one of claims claim 1-11, wherein the (meth)acrylate monomer is present and is selected from the group consisting of aliphatic monofunctional (meth)acrylate monomers, preferably cyclic aliphatic monofunctional (meth)acrylate monomers such as tetrahydrofurfuryl acrylate, isobornyl acrylate, trimethylolpropane formal acrylate and combinations thereof; aliphatic difunctional (meth)acrylate monomers, preferably acyclic aliphatic difunctional (meth)acrylate monomers such as 1,4-butanediol di(meth)acrylate, 1,6-hexanediol diacrylate, and combinations thereof; and mixtures thereof.

13. The composition of any one of claims 1-12, which is anhydrous.

14. A method of forming an electrode comprising the steps of:
(a) applying a composition of any of claims 1-13 to a current collector to form a layer;
(b) optionally, heating the layer; and
(c) curing the layer by exposing it to radiation.

15. The method of claim 14, wherein the composition does not comprise the free radical photoinitiator and the radiation is electron beam radiation.

16. The method of claim 14, wherein the composition comprises the free radical photoinitiator and the radiation is actinic radiation.
